# FASCICULE DE BREVET EUROPEEN

(11) **EP 2 810 546 B1**
(45) Date de publication et mention de la délivrance du brevet: **14.10.2020**
(21) Numéro de dépôt: 14170080.7
(22) Date de dépôt: 27.05.2014
(51) Int. Cl.: A01C 7/04

(54) **Dispositif de distribution de graines à l'unité**
Verteilvorrichtung für einzelne Körner
Device for dispensing individual seeds

(30) Priorité: 04.06.2013 FR 1355138
(43) Date de publication de la demande: 10.12.2014
(73) Titulaire: Ribouleau Monosem, 79240 Largeasse (FR)
(72) Inventeur: Bergere, Caroline, 79300 Bressuire (FR)
(74) Mandataire: Vidon Brevets & Stratégie

(56) Documents cités:
- EP-A2- 0 141 638
- WO-A1-96/02123
- WO-A1-2012/121658

## Description

### 1. Domaine de l'invention

Le domaine de l'invention est celui de la conception et de la réalisation des semoirs monograine à dépression.

Plus précisément, l'invention concerne un dispositif de distribution de graines à l'unité du type à dépression.

### 2. Art antérieur

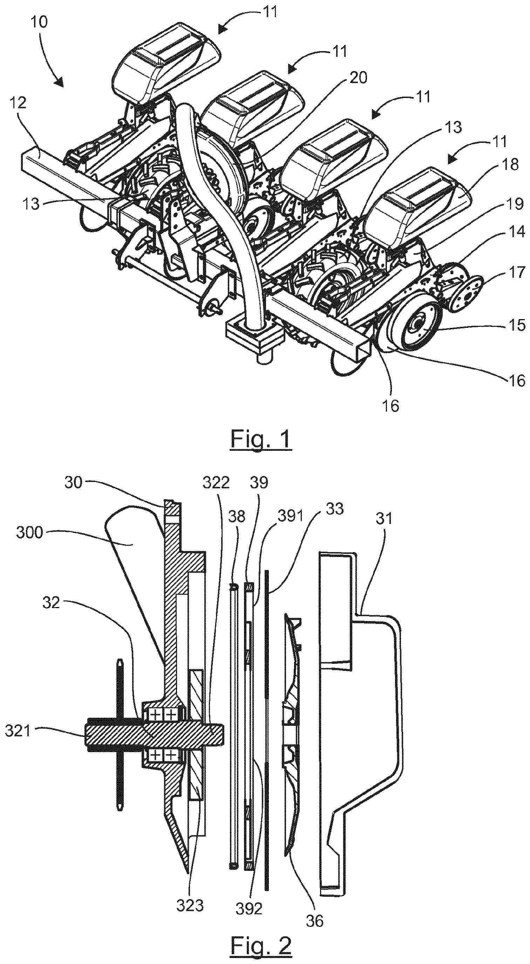

Les semoirs monograine à dépression 10, tel que celui illustré à la figure 1, sont classiquement mis en œuvre par des agriculteurs pour ensemencer les surfaces qu'ils cultivent.

Les semoirs comprennent généralement un châssis 12 porté par des roues 13 et destiné à être tracté ou porté par un engin agricole tel qu'un tracteur. Ils comprennent généralement plusieurs éléments semeurs 11 solidarisés côte-à-côte au châssis 12.

Chaque élément semeur 11 comprend généralement un bâti 14 qui repose sur le sol au moyen d'une paire de roues de jauge 15 entre lesquelles est placée une paire de disques ouvreurs 16. Un bloc arrière 17, comprenant souvent deux roues inclinées, est solidarisé à l'arrière du bâti 14. Les disques ouvreurs permettent d'ouvrir un sillon dans le sol lorsque le semoir est déplacé à sa surface. Les roues de jauges permettent de régler, en fonction de leur position, la profondeur du sillon. Le bloc arrière permet de refermer le sillon après que des graines y ont été déposées. Chaque élément semeur 11 comprend également des moyens de stockage de graines 18, dont la sortie communique avec un dispositif de distribution de graines à l'unité 19.

Au rang des dispositifs de distribution de graines à l'unité figurent notamment les dispositifs de distribution de graines pneumatiques à dépression à boîtier fixe. Un dispositif avec les caractéristiques du préambule de la revendication 1 est connu de EP 0 141 638 A2. Le document WO 2012/121658 A1 décrit un autre dispositif pneumatique à surpression, avec des moyens pour assurer l'étanchéité à l'air entre le tambour et le disque.

La présente invention concerne tout particulièrement les distributeurs de graines du type EP 0 141 638 A2.

Un tel dispositif de distribution de graines à l'unité comprend classiquement un boîtier destiné à être solidarisé de manière fixe à un élément semeur.

Ce boîtier comprend un tambour et un couvercle, fixes l'un par rapport à l'autre, et définissant ensemble une cavité intérieure.

Un arbre d'entraînement est monté mobile en rotation à travers le tambour. Une première extrémité de l'arbre d'entraînement s'étend à l'extérieur du tambour alors qu'une deuxième extrémité de l'arbre d'entraînement s'étend à l'intérieur de la cavité.

Un disque distributeur, traversé par une pluralité de trous d'aspiration de graines ménagés de manière régulière à sa périphérie, est monté solidaire en rotation sur l'arbre d'entraînement à l'intérieur de la cavité. Il y délimite, avec le tambour et le couvercle, une chambre de dépression et un réservoir de graines. Le tambour présente un orifice de mise en dépression de la chambre de dépression qui est destiné à être connecté avec un dispositif pour créer une dépression tel qu'une turbine 20.

La forme du tambour est choisie de manière telle qu'une portion de la zone du disque qui est traversée par les trous s'étende en dehors de la chambre de dépression. Une partie du disque échappe ainsi à la dépression en tournant, ce qui permet de laisser tomber les graines dans le sillon.

La distribution de graines à l'unité est obtenue de la manière suivante.

Alors que le semoir est déplacé à la surface du sol, l'arbre d'entraînement est entraîné en rotation via des moyens d'entraînement prévus à cet effet. Le disque distributeur est alors entraîné en rotation. Parallèlement, la turbine est mise en œuvre pour générer une dépression à l'intérieur de la chambre de dépression. Des graines sont acheminées depuis des moyens de stockage de graines dans le réservoir. Du fait de la dépression régnant à l'intérieur de la chambre de dépression, les graines contenues dans le réservoir sont aspirées et viennent se positionner une à une sur les trous d'aspiration du disque distributeur se trouvant en regard de la chambre de dépression. Il est à noter que le disque est muni d'un agitateur, consistant en une pièce séparée sur laquelle est fixée le disque et qui joue le rôle de rigidifier le disque d'une part, et d'autre part d'agiter, de brasser les graines avec ses ailes, ce qui permet de mieux caler les graines sur les trous. Des moyens de sélection peuvent éventuellement être mis en œuvre pour s'assurer que chaque trou ne piège qu'une seule graine. Au fur et à mesure que le disque distributeur tourne, les trous d'aspiration sur lesquels une graine est positionnée s'étendent en dehors de la chambre de dépression. La graine n'est alors plus maintenue sur le trou et tombe du disque en vue d'être acheminée dans le sillon préalablement ouvert.

Compte-tenu du pas selon lequel les trous sont répartis sur le disque et de la vitesse de déplacement du semoir, les graines sont déposées à l'unité dans le sillon à intervalle régulier.

### 3. Inconvénients de l'art antérieur

Afin de garantir une distribution de graines à l'unité efficace, des moyens d'étanchéisation sont mis en œuvre pour assurer l'étanchéité de la chambre de dépression.

Selon une première technique, l'étanchéité de la chambre de dépression est obtenue en mettant en applique le disque distributeur contre la périphérie du tambour. Ainsi, lorsqu'une aspiration est créée dans la chambre de dépression pour y générer une dépression, le disque est maintenu par la dépression contre le tambour et assure de ce fait l'étanchéité de la chambre de dépression.

Cette solution permet d'assurer une bonne étanchéité de la chambre de dépression. Elle pose toutefois quelques problèmes. Notamment, lorsque le disque distributeur est entraîné en rotation, il vient frotter contre le tambour. L'effort de friction entre le disque et le tambour impose alors de transmettre à l'arbre d'entraînement un couple d'entraînement relativement élevé pour pouvoir mettre en mouvement le disque distributeur. Ceci tend à augmenter la consommation énergétique et impose de surdimensionner les moyens d'entraînement de l'arbre, ce qui n'est pas satisfaisant. En outre, le frottement du disque contre le tambour engendre une usure prématurée de ces éléments et impose la mise en œuvre de campagnes de maintenance régulières et parfois lourdes (remplacement du tambour, du disque et/ou des pièces d'usure).

Selon une deuxième technique, l'étanchéité de la chambre de dépression est obtenue en interposant un joint d'étanchéité entre le disque distributeur et la périphérie du tambour, ce joint étant solidaire du tambour et donc fixe. Ainsi, lorsqu'une aspiration est créée dans la chambre de dépression pour y générer une dépression, le disque vient en applique contre ce joint pour assurer l'étanchéité de la chambre de dépression.

Cette solution permet également d'assurer une bonne étanchéité de la chambre de dépression. Elle concourt également à obvier le problème lié à l'usure prématurée du tambour et du disque inhérent à la première solution discutée précédemment. Toutefois, du fait que le disque vient frotter contre le joint, ce joint subit une usure pouvant être rapide qui impose la mise en œuvre de campagnes de maintenance fréquentes et donc coûteuses.

Selon une troisième technique, l'étanchéité de la chambre de dépression est obtenue en prévoyant un jeu très faible entre le disque distributeur et la périphérie du tambour. On assure ainsi l'étanchéité de la chambre de dépression sans que le disque distributeur ne vienne en appui contre le tambour.

Cette solution permet également d'assurer une bonne étanchéité de la chambre de dépression tout en obviant tant le problème lié à l'usure prématurée du tambour et du disque inhérent à la première solution, que celui lié à l'usure rapide à laquelle est sujet le joint de la deuxième solution. Toutefois, le ménagement d'un jeu suffisamment faible entre le disque et le tambour pour assurer l'étanchéité de la chambre de dépression tout en évitant la mise en contact du disque et du tambour impose le respect de règles de conception de mécanique de précision. Il en résulte que les dispositifs de distribution selon cette troisième solution se révèlent être difficiles et donc chers à fabriquer.

Afin de réduire les problèmes d'usure évoqués précédemment, il est possible de réduire la friction entre le disque et le tambour ou le joint en diminuant l'effort de compression exercé l'une sur l'autre par les pièces placées au contact l'une de l'autre. Ceci se ferait toutefois au détriment de l'étanchéité de la chambre de dépression. L'aspiration des graines depuis le réservoir vers les trous du disque ainsi que leur relâchement au moment de leur éjection vers le sol ne seraient alors pas optimaux. On observerait par conséquent un amoindrissement de la qualité de la distribution des graines.

### 4. Objectifs de l'invention

L'invention a notamment pour objectif de pallier ces inconvénients de l'art antérieur.

Plus précisément, un objectif de l'invention est de fournir un dispositif de distribution de graines à l'unité du type à dépression à boîtier fixe qui permette, dans au moins un mode de réalisation, d'optimiser la distribution des graines.

Notamment, l'invention poursuit l'objectif de produire un tel dispositif qui permette, dans au moins un mode de réalisation, d'assurer une bonne prise des graines dans le réservoir.

L'invention poursuit également l'objectif de produire un tel dispositif qui permette, dans au moins un mode de réalisation, de relâcher efficacement les graines au moment de leur éjection vers le sol.

Un autre objectif de l'invention est de mettre en œuvre un tel dispositif qui soit, dans au moins un mode de réalisation, peu sujet au phénomène d'usure.

L'invention a encore pour objectif de produire un tel dispositif dont la maintenance soit, dans au moins un mode de réalisation, facilitée.

L'invention a encore pour objectif de produire un tel dispositif qui permette, dans au moins un mode de réalisation, de contrôler le couple de frottement entre le disque et les moyens assurant l'étanchéité.

### 5. Exposé de l'invention

Ces objectifs, ainsi que d'autres qui apparaîtront par la suite, sont atteints selon l'invention à l'aide d'un dispositif de distribution de graines à l'unité selon la revendication 1.

Ainsi, l'invention repose sur une approche tout à fait originale qui consiste à assurer l'étanchéité de la chambre de dépression d'un dispositif de distribution de graine à l'unité du type à boitier fixe en interposant entre le disque distributeur et le tambour un joint élastique et un insert de frottement fixes par rapport au tambour, le joint venant en appui contre le tambour et l'insert de frottement, et l'insert de frottement venant en appui contre le disque distributeur, le joint élastique maintenant l'insert de frottement en appui contre le disque distributeur du fait de son élasticité.

De part la mise en œuvre de cette architecture, le disque distributeur ne frotte pas ni contre le joint ni contre le tambour au cours du fonctionnement du distributeur. Il vient au contraire frotter, avec un couple de frottement contrôlé, contre une pièce d'usure, en l'occurrence l'insert de frottement, prévue à cet effet. On évite ainsi les problèmes d'usure prématurée et limite en conséquence les campagnes de maintenance. Les opérations de maintenance sont en outre facilitées du fait qu'elles se limitent essentiellement au remplacement de l'insert de frottement qui, comme cela vient d'être indiqué, constitue une pièce d'usure.

Ce sont les propriétés d'élasticité du joint qui sont exploitées pour maintenir l'insert de frottement contre le disque, l'effort de friction entre le disque et l'insert étant alors maitrisé. Ainsi, l'aspiration générée dans la chambre de dépression n'est plus exploitée pour assurer l'étanchéité comme ceci est le cas dans certaines solutions de l'art antérieur. On maitrise ainsi cet effort de friction si bien qu'il est possible de limiter l'usure et de réduire le dimensionnement des moyens d'entraînement de l'arbre et de réduire la consommation d'énergie.

Selon une caractéristique de l'invention, ledit joint présente une raideur telle qu'il exerce sur ledit insert de frottement un effort compris entre 10N et 100N par mètre linéaire pour une course de compression du joint d'un millimètre.

Un joint présentant une telle élasticité permet d'exercer un effort de maintien en appui de l'insert de frottement contre le disque juste nécessaire pour garantir une excellente étanchéité de la chambre de dépression sans pour autant induire un effort de friction important entre le disque et l'insert de frottement. On peut alors réaliser une distribution de graines de manière satisfaisante et limiter la consommation d'énergie.

Selon une caractéristique préférentielle, ledit insert de frottement comprend une portion périphérique extérieure en contacte avec ledit joint, et une portion périphérique intérieure, ladite portion périphérique extérieure pouvant se déformer axialement par rapport à ladite portion périphérique intérieure.

Ainsi, sous l'effet de l'élasticité du joint, la portion périphérique extérieure de l'insert de frottement se déforme pour venir s'appliquer contre le disque distributeur. On améliore ainsi encore d'avantage l'étanchéité de la chambre de dépression tout en ayant une meilleure maîtrise de l'effort de friction entre le disque et l'insert de frottement.

Selon une caractéristique préférentielle, ledit arbre comprend un épaulement situé à l'intérieur de ladite chambre de dépression, ledit disque venant en appui contre ledit épaulement.

Le disque distributeur est ainsi maintenu efficacement en position y compris lorsqu'une dépression est générée dans la chambre de dépression. L'étanchéité est donc seulement liée à l'effort que le joint exerce sur l'insert et non à un effort qui serait exercé par le disque sur l'insert pendant la dépression. Ceci permet également de mieux maîtriser l'effort de friction entre le disque et l'insert et en particulier de le réduire.

Selon une caractéristique préférentielle, ledit insert de frottement est réalisé dans un matériau à faible coefficient de frottement, par exemple du bronze ou une matière plastique avec un revêtement de téflon®, entre autres.

On réduit ainsi les frottements entre le disque et l'insert sans nuire à l'étanchéité de la chambre de dépression.

Selon une caractéristique préférentielle, ledit joint appartient au groupe comprenant au moins :
- les joints à lèvre(s) ;
- les joints creux ;
- les joints pleins.

Selon une caractéristique préférentielle, ledit joint est solidarisé audit tambour.

On assure ainsi un bon maintien en position du joint.

Selon une caractéristique préférentielle, ledit joint est solidarisé audit insert de frottement.

Dans ce cas, ledit joint est préférentiellement solidarisé audit insert de frottement par collage, surmoulage ou clippage dans une gorge de forme complémentaire ménagée dans ledit insert de frottement.

L'opérateur en charge de la maintenance ne doit alors démonter que l'insert de frottement qui porte le joint pour remplacer l'ensemble insert/joint usagé par un neuf plutôt que de démonter et de remplacer d'une part l'insert de frottement et d'autre part le joint. La maintenance est ainsi simplifiée.

L'invention discutée concerne également un élément semeur comprenant un dispositif de distribution selon l'une quelconque des variantes exposées ci-avant.

L'invention discutée concerne également un semoir comprenant au moins un tel élément semeur.

### 6. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 illustre une vue en perspective d'un semoir ;
- la figure 2 illustre une vue éclatée d'un dispositif de distribution de graines selon l'invention ;
- la figure 3 illustre une vue en coupe transversale du dispositif de la figure 2;
- la figure 4 illustre une vue de détail de la figure 3 ;
- la figure 5 illustre une vue de côté du dispositif de la figure 3 sans le couvercle ;
- la figure 6 illustre une vue de côté de l'intérieur du tambour du dispositif de la figure 3 ;
- les figures 7, 8, 9 et 10 illustrent des joints d'un dispositif selon l'invention ;
- la figure 11 illustre une vue partielle en coupe transversale du distributeur de graines de la figure 3 ;
- la figure 12 illustre une vue partielle en coupe transversale d'une variante d'un distributeur de graines selon l'invention.

### 7. Description d'un mode de réalisation de l'invention

### 7.1. Structure

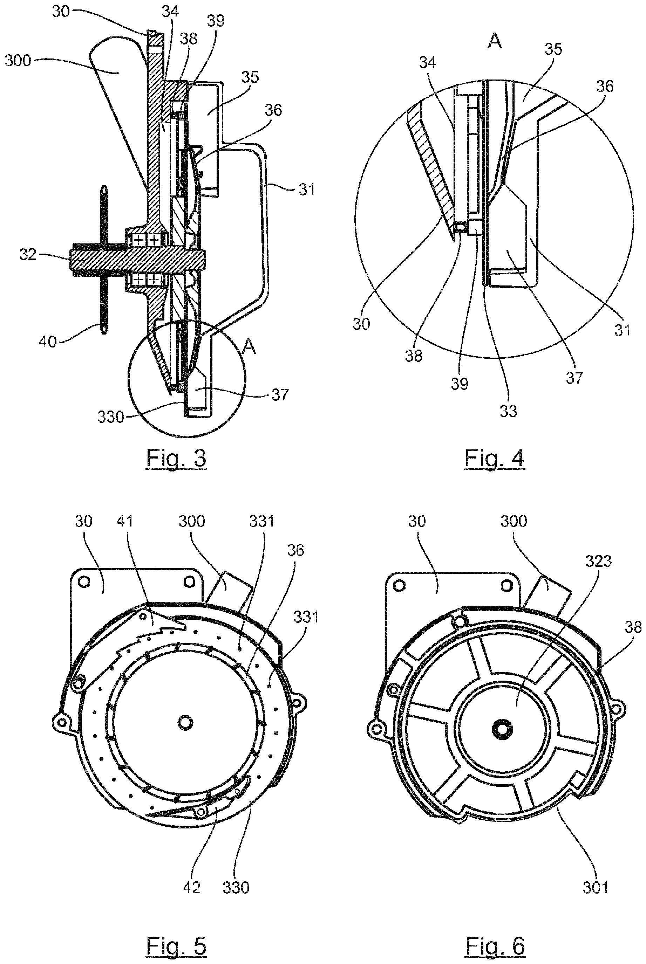

On présente en relation avec les figures 2 à 11, un exemple de dispositif de distribution (ou distributeur) de graine à l'unité selon l'invention.

Un tel dispositif de distribution de graines à l'unité comprend un boîtier destiné à être solidarisé de manière fixe à un élément semeur.

Ce boîtier comprend un tambour 30 et un couvercle 31, fixes l'un par rapport à l'autre, et définissant ensemble une cavité intérieure.

Un arbre d'entraînement 32 est monté mobile en rotation à travers le tambour 30. Une première extrémité 321 de l'arbre d'entraînement 32 s'étend à l'extérieur du tambour 30 alors qu'une deuxième extrémité 322 de l'arbre d'entraînement 32 s'étend à l'intérieur de la cavité.

Un disque distributeur 33, traversé par une pluralité de trous d'aspiration de graines 331 ménagés de manière régulière à sa périphérie, est monté solidaire en rotation sur l'arbre d'entraînement 32 à l'intérieur de la cavité. Il y délimite, avec le tambour 30 et le couvercle 31, une chambre de dépression 34 et un réservoir de graines 35.

L'arbre d'entraînement 32 comprend un épaulement 323 qui s'étend à l'intérieur de la chambre de distribution 34. Cet épaulement 323 peut être directement formé dans l'arbre 32 ou bien être rapporté sur celui-ci.

Le disque distributeur 33 est plaqué contre l'épaulement 323.

Le tambour 30 présente un orifice 300 de mise en dépression de la chambre de dépression 34 qui est destiné à être connecté avec un dispositif pour faire le vide telle qu'une turbine (non représentée).

La forme du tambour 30 est choisie de manière telle qu'une portion 330 de la zone du disque 33 qui est traversée par les trous 331 s'étende en dehors de la chambre de dépression 34. Le contour du tambour 30 présente ainsi une encoche 301.

Un disque agitateur à pales 36 est monté solidaire en rotation sur l'arbre à l'intérieur du réservoir 35.

Dans un autre mode de réalisation, les pales pourront être soudées ou moulées directement sur le disque distributeur 33, dès lors que le disque est suffisamment rigide.

Le disque distributeur 33 ne se déforme pas, étant suffisamment rigide en tant que tel et/ou étant suffisamment rigide du fait du disque agitateur à pales 36. Il ne peut ainsi pas être déformé sous l'effet de la dépression susceptible d'être créée dans la chambre de dépression 34.

Le couvercle 31 définit avec le disque 33 une zone d'éjection des graines 37.

Le dispositif comprend des moyens d'étanchéisation pour assurer l'étanchéité de la chambre de dépression 34.

Ces moyens d'étanchéisation comprennent un joint élastique 38 et un insert de frottement 39.

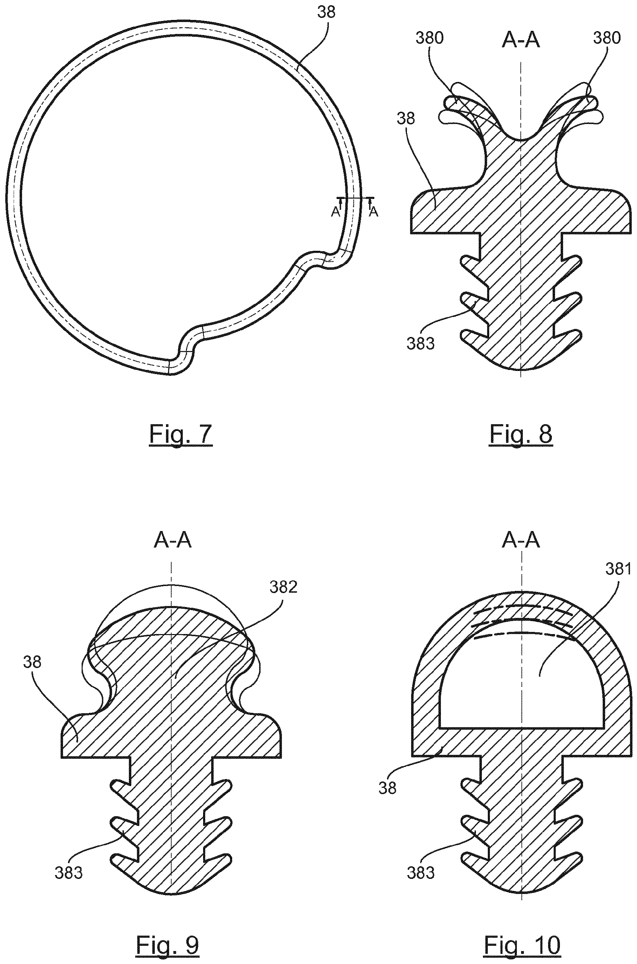

Le joint élastique 38 est fixe par rapport au tambour 30. Dans ce mode de réalisation, il y est solidarisé à l'intérieur d'une gorge 302 ménagée à cet effet dans le contour périphérique du tambour 30 délimitant la chambre de dépression 34. Le joint 38 comprend une portion de solidarisation 383 prévue pour être insérée à force dans la gorge 302. Il pourra par exemple être :
- un joint ayant une ou plusieurs lèvres 380, tel que celui illustré à la figure 8;
- un joint à âme pleine 382, tel que celui illustré à la figure 9 ;
- un joint à âme creuse 381, tel que celui illustré à la figure 10.

Ce joint sera préférentiellement réalisé dans une matière plastique telle qu'un élastomère.

L'insert de frottement 39 est monté fixe par rapport au tambour 30. Il pourra par exemple y être solidarisé, de préférence en son centre, au moyen de vis ou autre. Il est interposé entre le joint élastique 38 et le disque distributeur 33. Sa forme est définie de manière telle qu'il n'obstrue pas les trous d'aspiration 331 du disque 33.

L'insert de frottement 39 comprend une portion périphérique extérieure 391 en contact avec le joint 38, et une portion périphérique intérieure 392. L'insert présente une certaine élasticité en sorte que la portion périphérique extérieure 391 peut se déformer axialement par rapport à la portion périphérique intérieure 392 pour être plaquée contre le disque 33 sous l'effet du joint 38.

En effet, la portion périphérique extérieure 391 est reliée à la portion périphérique intérieure 392 par des rayons pour donner une souplesse à la portion périphérique extérieure 391. La portion périphérique intérieure peut être fixée sur le boîtier à l'aide de moyens de fixation tels que des vis ou des arrêts en rotation ou autres, la fixation devant assurer que la portion périphérique intérieure 392 ne tourne pas avec le disque.

L'insert de frottement 39 est réalisé dans un matériau à faible coefficient de frottement. Il pourra par exemple s'agir d'une matière plastique, par exemple revêtue de téflon®.

Le joint élastique 38 présente préférentiellement une raideur telle qu'il exerce sur l'insert de frottement un effort compris entre 10N et 100N par mètre linéaire pour une course de compression d'un millimètre.

Du fait de son élasticité, le joint d'étanchéité élastique 38 maintient l'insert de frottement en appui contre le disque distributeur 33.

Un tel dispositif de distribution peut être mis en œuvre dans un élément semeur tels que ceux illustrés à la figure 1. Un tel élément semeur peut être mis en œuvre dans un semoir tel que celui illustré à la figure 1.

### 7.2. Fonctionnement

La distribution de graines à l'unité est obtenue de la manière suivante.

Alors que le semoir est déplacé à la surface du sol, l'arbre d'entraînement 32 est entraîné en rotation via des moyens d'entraînement prévus à cet effet. L'arbre d'entraînement 32 pourra par exemple porter une couronne 40 reliée par une chaîne à l'arbre d'un moteur ou à un arbre moteur (non représentés). Le disque distributeur 33 est alors entraîné en rotation proportionnellement à la vitesse d'avancement du semoir.

Parallèlement, la turbine 20 est mise en œuvre pour générer une dépression à l'intérieur de la chambre de dépression 34. Des graines sont acheminées depuis les moyens de stockage de graines de l'élément semeur dans le réservoir 35. Du fait de la dépression régnant à l'intérieur de la chambre de dépression 34, les graines contenues dans le réservoir 35 sont aspirés et viennent se positionner une à une sur les trous d'aspiration 331 du disque distributeur 33 se trouvant en regard de la chambre de dépression 34.

Des moyens de sélection 41, connus en soit, peuvent éventuellement être mis en œuvre pour s'assurer que chaque trou 331 ne piège qu'une seule graine.

Au fur et à mesure que le disque distributeur 33 tourne, les trous d'aspiration 331 sur chacun desquels une graine est positionnée s'étendent en dehors de la chambre de dépression 34 (portion 330). La graine n'est alors plus maintenue sur le trou 331 et tombe du disque 33 dans la zone d'éjection 37 en vue d'être acheminée dans le sillon préalablement creusé. Des moyens d'aide à l'éjection 42, connus en soit, peuvent également être mis en œuvre.

Compte-tenu notamment du rapport de vitesses entre la vitesse d'avancement du semoir et la vitesse de rotation du disque et compte-tenu du pas selon lequel les trous sont répartis sur le disque, les graines sont déposées à l'unité dans le sillon à intervalle régulier.

Du fait de sa raideur ou de son association avec un agitateur, le disque distributeur 33 ne se déforme pas sous l'effet de la dépression générée à l'intérieur de la chambre de dépression 34. Il n'est donc pas plaqué contre l'insert de frottement ce qui limite la friction.

Du fait de son élasticité, le joint 38 imprime à l'insert de frottement 39 un effort qui tend à plaquer et maintenir celui-ci contre le disque 33. On assure ainsi une parfaite étanchéité de la chambre de dépression 34 sans pour autant générer un effort de friction important entre l'insert de frottement 39 et le disque distributeur 33. Ce niveau de friction dépend de la raideur du joint 38. La raideur de celui-ci est donc choisie de manière telle que l'étanchéité de la chambre de dépression soit assurée en générant une friction la plus faible possible entre le disque et l'insert.

La technique selon l'invention permet ainsi d'assurer une parfaite étanchéité de la chambre de dépression et par conséquent une distribution optimisée des graines, tout en limitant le dimensionnement des moyens moteurs mis en œuvre pour animer le distributeur et en réduisant la fréquence des campagnes de maintenance.

### 7.3. Variante

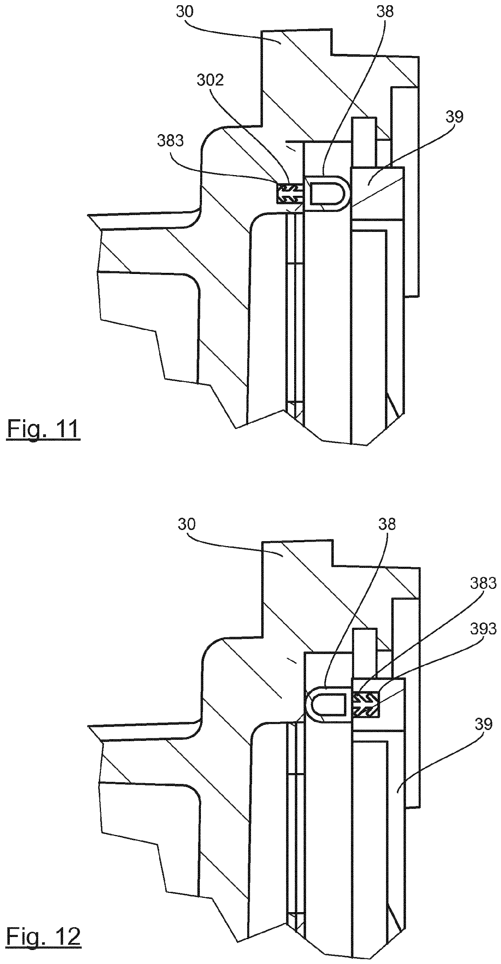

La figure 12 illustre une vue partielle en coupe transversale d'une variante d'un distributeur de graines selon l'invention.

La structure du distributeur de graines selon cette variante est identique à celle du distributeur de graines selon le mode de réalisation qui vient d'être décrit, à ceci près que le joint élastique 38 n'est plus solidaire du tambour 30. Il est au contraire solidaire de l'insert de frottement 39.

Dans le mode de réalisation de la figure 12, le joint 38 est clippé dans une gorge 393 ménagée à cet effet dans l'insert de frottement 39. Le joint 38 comprend ainsi préférentiellement une portion de solidarisation 383 prévue pour être insérée à force dans la gorge 393.

Dans des variantes, le joint 38 pourra être solidarisé à l'insert de frottement 39 par collage, par surmoulage ou tout autre technique de solidarisation adaptée.

La mise en œuvre de ce mode de réalisation permet de faciliter la maintenance du distributeur de graines. En effet, l'opérateur en charge de la maintenance doit démonter seulement l'insert de frottement qui porte le joint pour remplacer l'ensemble insert/joint usagé par un neuf plutôt que de démonter et de remplacer d'une part l'insert de frottement et d'autre part le joint.

Du fait de son élasticité, le joint 38, en appui contre le tambour 30, agit contre l'insert de frottement 39 pour le plaquer contre le disque 33 avec un niveau de friction juste suffisant pour garantir l'étanchéité de la chambre de dépression 34. On limiter ainsi l'usure et la fréquence des campagnes de maintenance tout en assurant une étanchéité efficace de la chambre de dépression et par conséquent une distribution optimale des graines.

Dans une variante, l'insert de frottement pourra ne pas être solidarisé au tambour. Il pourra au contraire être monté flottant sur le tambour de manière telle qui soit lié à celui-ci en rotation mais qu'il puisse de déplacer par rapport à celui-ci le long de son axe longitudinal. L'insert de frottement pourra être traversé par des trous longitudinaux et le tambour présenter des axes s'étendant le long d'axes parallèles à l'axe de l'arbre d'entrainement. Ces axes seront insérés dans les trous de l'insert de frottement bloquant celui-ci en rotation mais pas en translation.

## Revendications

1. Dispositif de distribution de graines à l'unité, ledit dispositif comprenant :
- un tambour (30) destiné à être solidarisé de manière fixe à un semoir (10) ;
- un couvercle (31) fixe par rapport audit tambour (30) et définissant avec ledit tambour (30) une cavité intérieure ;
- un arbre d'entraînement (32) monté mobile en rotation à travers ledit tambour (30) ;
- un disque distributeur (33) traversé par une pluralité de trous d'aspiration (331) de graines ménagés de manière régulière à la périphérie dudit disque (33), ledit disque (33) étant monté solidaire en rotation sur ledit arbre (32) à l'intérieur de ladite cavité en sorte qu'il y délimite avec ledit tambour (30) et ledit couvercle (31) une chambre de dépression (34) et un réservoir (35) de graines, une portion (330) de la zone dudit disque (33) traversée par lesdits trous (331) s'étendant en dehors de ladite chambre de dépression (34),
- des moyens pour assurer l'étanchéité de ladite chambre de dépression (34) entre ledit tambour (30) et ledit disque (33) ;
lesdits moyens pour assurer l'étanchéité comprenant un insert de frottement (39) monté immobile en rotation par rapport audit tambour (30) contre la périphérie dudit disque (33), et un joint d'étanchéité élastique (38) monté immobile en rotation entre ledit tambour (31) et ledit insert de frottement (39), ledit joint d'étanchéité élastique (38) maintenant ledit insert de frottement (39) en appui contre ledit disque (33), **caractérisé en ce que** l'insert de frottement (39) forme une pièce d'usure remplaçable, et **en ce que** ledit joint (38) présente une raideur telle qu'il exerce sur ledit insert de frottement (39) un effort compris entre 10N et 100N par mètre linéaire pour une course de compression d'un millimètre.

2. Dispositif selon la revendication 1, **caractérisé en ce que** ledit insert de frottement (39) comprend une portion périphérique extérieure (391) en contact avec ledit joint (38), et une portion périphérique intérieure (392), ladite portion périphérique extérieure (391) pouvant se déformer axialement par rapport à ladite portion périphérique intérieure (392).

3. Dispositif selon l'une quelconque des revendications 1 et 2, **caractérisé en ce que** ledit arbre (32) comprend un épaulement (323) situé à l'intérieur de ladite chambre de dépression (34), ledit disque (33) venant en appui contre ledit épaulement (323).

4. Dispositif selon l'une quelconque des revendications 1 à 3, **caractérisé en ce que** ledit insert de frottement (39) est réalisé dans un matériau à faible coefficient de frottement.

5. Dispositif selon l'une quelconque des revendications 1 à 4, **caractérisé en ce que** ledit joint (38) appartient au groupe comprenant au moins :
- les joints à lèvre(s) ;
- les joints creux ;
- les joints pleins.

6. Dispositif selon l'une quelconque des revendications 1 à 5, **caractérisé en ce que** ledit joint (38) est solidarisé audit tambour (30).

7. Dispositif selon l'une quelconque des revendications 1 à 5, **caractérisé en ce que** ledit joint (38) est solidarisé audit insert de frottement (39).

8. Dispositif selon la revendication 7, **caractérisé en ce que** ledit joint (38) est solidarisé audit insert de frottement (39) par collage, surmoulage ou clippage dans une gorge (393) de forme complémentaire ménagée dans ledit insert de frottement (39).

9. Elément semeur (11) comprenant un dispositif de distribution selon l'une quelconque des revendications 1 à 8.

10. Semoir (10) comprenant au moins un élément semeur (17) selon la revendication 9.

## Patentansprüche

1. Verteilvorrichtung für einzelne Körner, wobei die Vorrichtung umfasst:
- eine Trommel (30), die dazu bestimmt ist, fest mit einer Sämaschine (10) verbunden zu werden;
- eine Abdeckung (31), die in Bezug auf die Trommel (30) fest ist und mit der Trommel (30) einen inneren Hohlraum definiert;
- eine Antriebswelle (32), die durch die Trommel (30) hindurch drehbeweglich gelagert ist;
- eine Verteilerscheibe (33), die von mehreren Ansauglöchern (331) für Körner durchquert wird, die gleichmäßig am Umfang der Scheibe (33) ausgebildet sind, wobei die Scheibe (33) drehfest auf der Welle (32) im Inneren des Hohlraums angebracht ist, derart, dass sie hier mit der Trommel (30) und der Abdeckung (31) eine Unterdruckkammer (34) und einen Kornbehälter (35) begrenzt, wobei sich ein Abschnitt (330) des von den Löchern (331) durchquerten Bereichs der Scheibe (33) außerhalb der Unterdruckkammer (34) erstreckt,
- Mittel zum Sicherstellen der Dichtigkeit der Unterdruckkammer (34) zwischen der Trommel (30) und der Scheibe (33);
wobei die Mittel zum Sicherstellen der Dichtigkeit einen Reibeinsatz (39), der drehfest in Bezug auf die Trommel (30) am Umfang der Scheibe (33) angebracht ist, und eine elastische Dichtung (38), die drehfest zwischen der Trommel (31) und dem Reibeinsatz (39) angebracht ist, umfassen, wobei die elastische Dichtung (38) den Reibeinsatz (39) in Anlage an der Scheibe (33) hält,
**dadurch gekennzeichnet, dass** der Reibeinsatz (39) ein austauschbares Verschleißteil bildet, und dadurch, dass die Dichtung (38) eine solche Steifigkeit aufweist, dass sie auf den Reibeinsatz (39) eine Kraft zwischen 10 N und 100 N pro laufendem Mater für einen Kompressionsweg von einem Millimeter ausübt.

2. Vorrichtung nach Anspruch 1, **dadurch gekennzeichnet, dass** der Reibeinsatz (39) einen äußeren Umfangsabschnitt (391), der sich mit der Dichtung (38) in Kontakt befindet, und einen inneren Umfangsabschnitt (392) umfasst, wobei sich der äußere Umfangsabschnitt (391) in Bezug auf den inneren Umfangsabschnitt (392) axial verformen kann.

3. Vorrichtung nach einem der Ansprüche 1 und 2, **dadurch gekennzeichnet, dass** die Welle (32) einen Bund (323) umfasst, der sich im Inneren der Unterdruckkammer (34) befindet, wobei die Scheibe (33) an dem Bund (323) zur Anlage kommt.

4. Vorrichtung nach einem der Ansprüche 1 bis 3, **dadurch gekennzeichnet, dass** der Reibeinsatz (39) aus einem Material mit niedrigem Reibungskoeffizienten hergestellt ist.

5. Vorrichtung nach einem der Ansprüche 1 bis 4 **dadurch gekennzeichnet, dass** die Dichtung (38) zu der Gruppe gehört, die wenigstens umfasst:
- die Lippendichtungen;
- die Hohldichtungen;
- die Volldichtungen.

6. Vorrichtung nach einem der Ansprüche 1 bis 5, **dadurch gekennzeichnet, dass** die Dichtung (38) mit der Trommel (30) fest verbunden ist.

7. Vorrichtung nach einem der Ansprüche 1 bis 5, **dadurch gekennzeichnet, dass** die Dichtung (38) mit dem Reibeinsatz (39) fest verbunden ist.

8. Vorrichtung nach Anspruch 7, **dadurch gekennzeichnet, dass** die Dichtung (38) mit dem Reibeinsatz (39) durch Kleben, Umspritzen oder Einrasten in eine in dem Reibeinsatz (39) ausgebildete Rille (393) von komplementärer Form fest verbunden ist.

9. Säelement (11), welches eine Verteilvorrichtung nach einem der Ansprüche 1 bis 8 umfasst.

10. Sämaschine (10), welche wenigstens ein Säelement (17) nach Anspruch 9 umfasst.

## Claims

1. Device for dispensing seeds individually, said device comprising:
- a drum (30) intended to be attached fixedly to a seeder (10);
- a cover (31) that is fixed with respect to said drum (30) and with said drum (30) defines an interior cavity;
- a drive shaft (32) mounted with the ability to rotate through said drum (30);
- a distributor disc (33) through which there passes a plurality of seed suction holes (331) formed uniformly at the periphery of said disc (33), said disc (33) being mounted on said shaft (32) to rotate as one with same inside said cavity so that there it delimits, with said drum (30) and said cover (31) a vacuum chamber (34) and a seed reservoir (35), a portion (330) of the region of said disc (33) through which said holes (331) pass extending outside of said vacuum chamber (34),
- means for providing the sealing of said vacuum chamber (34) between said drum (30) and said disc (33) ;
said means for providing sealing comprising a rubbing insert (39) mounted with the inability to rotate with respect to said drum (30) against the periphery of said disc (33), and an elastic seal (38) mounted with the inability to rotate between said drum (31) and said rubbing insert (39), said elastic seal (38) keeping said rubbing insert (39) pressed against said disc (33), **characterized in that** the rubbing insert (39) forms a replaceable wearing component, and **in that** said seal (38) has a stiffness such that it applies to said rubbing insert (39) a force of between 10N and 100N per linear metre for a compression travel of one millimetre.

2. Device according to Claim 1, **characterized in that** said rubbing insert (39) comprises an exterior peripheral portion (391) in contact with said seal (38), and an interior peripheral portion (392), said exterior peripheral portion (391) being able to deform axially with respect to said interior peripheral portion (392).

3. Device according to either one of Claims 1 and 2, **characterized in that** said shaft (32) comprises a shoulder (323) situated inside said vacuum chamber (34), said disc (33) coming to bear against said shoulder (323).

4. Device according to any one of Claims 1 to 3, **characterized in that** said rubbing insert (39) is made from a material with a low coefficient of friction.

5. Device according to any one of Claims 1 to 4, **characterized in that** said seal (38) belongs to the group comprising at least:
- lip seals with one or more lips;
- hollow seals;
- solid seals.

6. Device according to any one of Claims 1 to 5, **characterized in that** said seal (38) is secured to said drum (30).

7. Device according to any one of Claims 1 to 5, **characterized in that** said seal (38) is secured to said rubbing insert (39).

8. Device according to Claim 7, **characterized in that** said seal (38) is secured to said rubbing insert (39) by bonding, overmoulding or clipping into a groove (393) of complementary shape formed in said rubbing insert (39).

9. Seeding element (11) comprising a distribution device according to any one of Claims 1 to 8.

10. Seeder (10) comprising at least one seeding element (17) according to Claim 9.
